(19)

**Europäisches Patentamt**
**European Patent Office**
**Office européen des brevets**

(11) **EP 4 184 681 A1**

# EUROPEAN PATENT APPLICATION
published in accordance with Art. 153(4) EPC

(43) Date of publication:
**24.05.2023 Bulletin 2023/21**

(21) Application number: **22776106.1**

(22) Date of filing: **23.03.2022**

(51) International Patent Classification (IPC):
*H01M 50/24* (2021.01)     *H01M 50/251* (2021.01)
*H01M 50/224* (2021.01)    *H01M 10/658* (2014.01)
*H01M 10/663* (2014.01)    *H01M 10/63* (2014.01)
*H01M 10/627* (2014.01)    *H01M 10/48* (2006.01)

(52) Cooperative Patent Classification (CPC):
**H01M 10/48; H01M 10/627; H01M 10/63;**
**H01M 10/658; H01M 10/663; H01M 50/224;**
**H01M 50/24; H01M 50/251**

(86) International application number:
**PCT/KR2022/004096**

(87) International publication number:
**WO 2022/203406 (29.09.2022 Gazette 2022/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.03.2021 KR 20210039191**

(71) Applicant: **LG Energy Solution, Ltd.**
**Seoul 07335 (KR)**

(72) Inventors:
 • **HONG, Sang-Woo**
 **Daejeon 34122 (KR)**

 • **LEE, Hyun-Min**
 **Daejeon 34122 (KR)**
 • **PARK, Dong-Ho**
 **Daejeon 34122 (KR)**
 • **YOO, Ji-Ho**
 **Daejeon 34122 (KR)**
 • **LEE, Yong-Tae**
 **Daejeon 34122 (KR)**
 • **LEE, Jong-Soo**
 **Daejeon 34122 (KR)**
 • **LEE, Ji-Won**
 **Daejeon 34122 (KR)**

(74) Representative: **Hoffmann Eitle**
**Patent- und Rechtsanwälte PartmbB**
**Arabellastraße 30**
**81925 München (DE)**

(54) **POWER STORAGE APPARATUS**

(57) An energy storage system according to an embodiment of the present disclosure includes at least one battery rack and an anti-explosion housing hermetically accommodating the at least one battery rack to increase fire or explosion safety of the battery rack.

FIG. 1

**Description**

TECHNICAL FIELD

The present disclosure relates to an energy storage system.

The present application claims priority to Korean Patent Application No. 10-2021-0039191 filed on March 25, 2021 in the Republic of Korea, the disclosures of which are incorporated herein by reference.

BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) that are driven by an electrical driving source. Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack or a battery rack using at least one battery module with an addition of any other component. Meanwhile, an energy storage system includes at least one battery rack as an energy source.

In general, the conventional energy storage system includes a plurality of battery racks. Here, the plurality of battery racks includes a plurality of battery modules stacked upon one another, each including at least one battery cell, and a rack case accommodating the plurality of battery cells.

In the case of the conventional energy storage system, there are risks of fires in the battery rack or even explosions of the battery rack due to defects in the battery cell or system. When fires or explosions occur, greater secondary damage may occur.

Therefore, there is a need for an approach to provide an energy storage system with improved fire or explosion safety of a battery rack.

DISCLOSURE

Technical Problem

Therefore, the present disclosure is directed to providing an energy storage system with improved fire or explosion safety of a battery rack.

Technical Solution

To solve the above-described problem, the present disclosure provides an energy storage system including at least one battery rack; and an anti-explosion housing hermetically accommodating the at least one battery rack.

The anti-explosion housing may include a steel sheet of a predetermined thickness.

The anti-explosion housing may include a bottom cover configured to cover a bottom of the at least one battery rack; a pair of side covers coupled to the bottom cover, and configured to cover two sides of the at least one battery rack; a door unit coupled to the pair of side covers, wherein the door unit is open/closed on a front side of the at least one battery rack; a rear cover provided on a rear side of the door unit to cover a rear side of the at least one battery rack; and a top cover provided on the rear cover and the door unit to cover a top of the at least one battery rack.

The anti-explosion housing may include a base plate to support a bottom of the bottom cover.

The base plate may include at least one reinforcement rib on an upper surface to reinforce a strength of the base plate.

The pair of side covers may include a first side cover to cover a side of the at least one battery rack; and a second side cover positioned opposite the first side cover to cover an opposite side of the at least one battery rack.

Each of the first side cover and the second side cover may include a plurality of side panels stacked upon one another.

The first side cover and the second side cover may include a thermal insulation panel positioned facing the side of the at least one battery rack.

The thermal insulation panel may include superwool.

The door unit may be pivotably hinge-connected from the pair of side covers.

A pair of the door units may be provided, and each door unit may be connected to each side cover.

The rear cover may include at least one rear panel positioned facing the rear side of the at least one battery rack; and an air-conditioning unit provided in the at least one rear panel to control an amount of heat generated from the at least one battery rack.

When an abnormal situation in the at least one battery rack occurs, the air-conditioning unit may detect heat or smoke generated from the at least one battery rack and stop the operation of the at least one battery rack.

The anti-explosion housing may include at least one guide pole between the door unit and the rear cover to guide the support of the at least one battery rack.

Advantageous Effects

According to the various embodiments as described above, it is possible to provide an energy storage system with improved fire or explosion safety of a battery rack.

DESCRIPTION OF DRAWINGS

The accompanying drawings illustrate an exemplary embodiment of the present disclosure and together with the following detailed description, serve to provide further understanding of the technical features of the present disclosure, and thus the present disclosure is not construed as being limited to the drawings.

FIG. 1 is a diagram illustrating an energy storage system according to an embodiment of the present disclosure.
FIG. 2 is a diagram illustrating a battery rack of the energy storage system of FIG. 1.
FIG. 3 is a diagram illustrating a battery module of the battery rack of FIG. 2.
FIG. 4 is an exploded perspective view of an anti-explosion housing of the energy storage system of FIG. 1.
FIG. 5 is a diagram illustrating a base plate of the anti-explosion housing of FIG. 4.
FIGS. 6 and 7 are diagrams illustrating the mechanism for ensuring safety through an anti-explosion housing when an abnormal situation occurs in the energy storage system of FIG. 1.
FIG. 8 is a graph illustrating the calculation of the explosion pressure related to an anti-explosion housing of the energy storage system of FIG. 1.
FIG. 9 is a graph illustrating the calculation of the explosion pressure applied to an inner wall of an anti-explosion housing of the energy storage system of FIG. 1.
FIG. 10 is a graph illustrating the calculation of the maximum displacement and the maximum stress applied to an inner wall of an anti-explosion housing of the energy storage system of FIG. 1.
FIGS. 11 and 12 are graphs illustrating the calculation of the maximum stress and the maximum displacement vs thickness of an anti-explosion housing of the energy storage system of FIG. 1.

BEST MODE

The present disclosure will become apparent by describing exemplary embodiments of the present disclosure in detail with reference to the accompanying drawings. The disclosed embodiments are provided by way of illustration to help the understanding of the present disclosure, and it should be understood that the present disclosure may be embodied in many other forms. Additionally, to help the understanding of the present disclosure, the accompanying drawings may show some elements in the exaggerated size, not in the actual size.

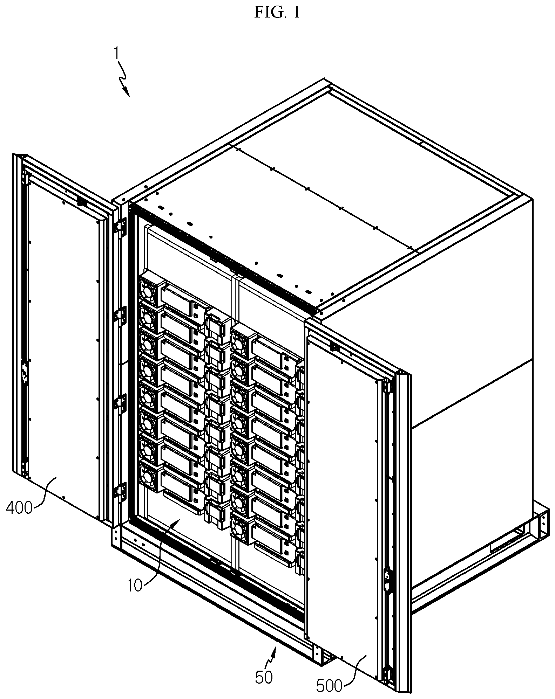

FIG. 1 is a diagram illustrating an energy storage system according to an embodiment of the present disclosure.

Referring to FIG. 1, the energy storage system 1 may be used as a domestic or industrial energy source. The energy storage system 1 may include a battery rack 10 and an anti-explosion housing 50.

The energy storage system 1 may include at least one battery rack 10 as an energy source of the energy storage system 1. Hereinafter, this embodiment is described based on the plurality of battery racks 10.

Hereinafter, the battery rack 10 will be described in more detail.

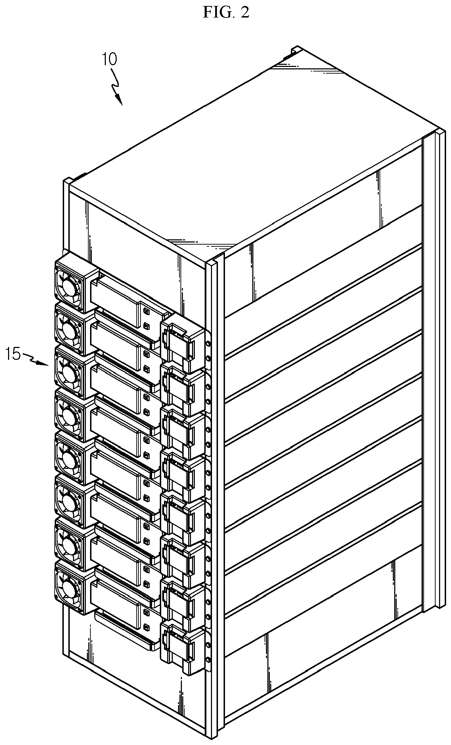

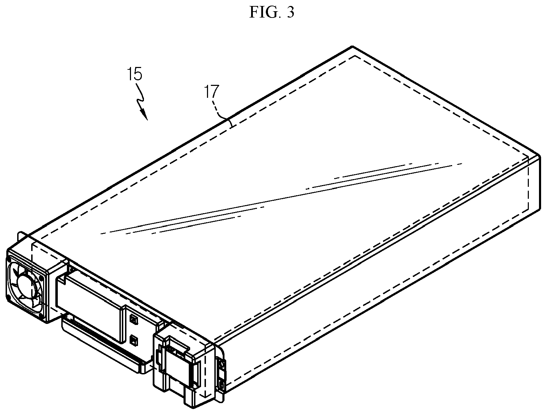

FIG. 2 is a diagram illustrating the battery rack of the energy storage system of FIG. 1, and FIG. 3 is a diagram illustrating the battery module of the battery rack of FIG. 2.

Referring to FIGS. 2 and 3, the battery rack 10 may include at least one battery module 15. Hereinafter, this embodiment is described based on the plurality of battery modules 15 stacked upon one another along the heightwise direction of the battery rack 10.

The plurality of battery modules 15 may include at least one battery cell 17. Hereinafter, this embodiment is described based on the plurality of battery cells 17 stacked and electrically connected to each other.

The plurality of battery cells 17 may include lithium ion batteries. Specifically, the plurality of battery cells 17 may include secondary batteries, for example, pouch-type secondary batteries, cylindrical secondary batteries or prismatic secondary batteries. Hereinafter, this embodiment is described based on that the plurality of battery cells 17 includes pouch-type secondary batteries.

Referring back to FIG. 1, the anti-explosion housing 50 may hermetically receive the at least one battery rack 10, in this embodiment, the plurality of battery racks 10 by hermetically covering the at least one battery rack 10 or the plurality of battery racks 10.

In the event of fires caused by abnormal situations in the plurality of battery racks 10, and further, dangerous situations, for example, explosions of the battery rack 10, the anti-explosion housing 50 may be configured to withstand the fires or explosion pressure.

To this end, the anti-explosion housing 50 may include a steel sheet to withstand the explosion pressure. Here, a predetermined thickness of the steel sheet may be designed considering the Safety Factor of between 1.2 and 2.0. Specifically, the predetermined thickness may be at least 200 mm considering the Safety Factor.

Furthermore, the anti-explosion housing 50 may include a galvanized steel sheet. Additionally, the anti-explosion housing 50 may include an electrogalvanized steel sheet.

Hereinafter, the anti-explosion housing 50 will be described in more detail.

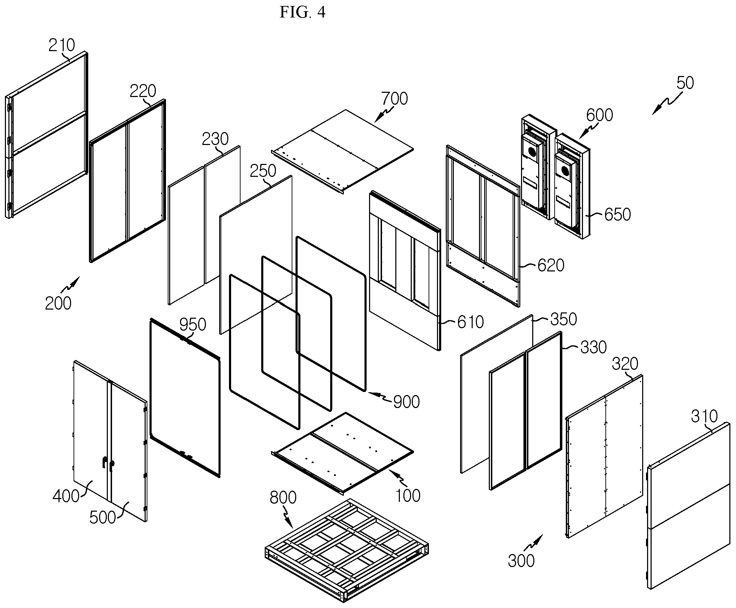

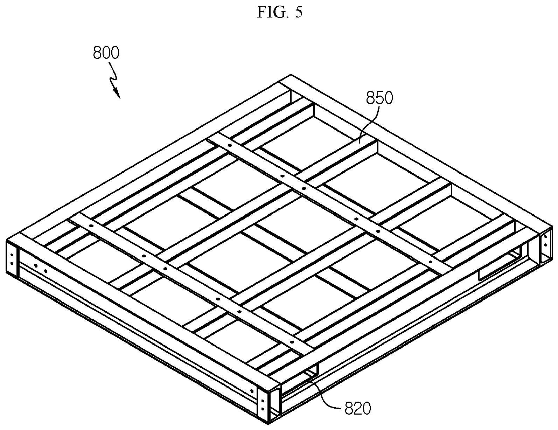

FIG. 4 is an exploded perspective view of the anti-explosion housing of the energy storage system of FIG. 1, and FIG. 5 is a diagram illustrating a base plate of the anti-explosion housing of FIG. 4.

Referring to FIGS. 1, 4 and 5, the anti-explosion housing 50 may include a bottom cover 100, side covers 200, 300, door units 400, 500, a rear cover 600 and a top cover 700.

The bottom cover 100 may cover the bottom of the at least one battery rack 10, in this embodiment, the plurality of battery racks 10. The bottom cover 100 may have a sufficient size to cover the bottom of the plurality of battery racks 10, and may include the steel sheet. Furthermore, the bottom cover 100 may include a galvanized steel sheet or an electrogalvanized steel sheet.

The pair of side covers 200, 300 may be provided and coupled to the bottom cover 100, and may cover two sides of the at least one battery rack 10, in this embodiment, the plurality of battery racks 10.

The side covers 200, 300 may include the first side cover 200 and the second side cover 300.

The first side cover 200 may cover one side of the at least one battery rack 10, in this embodiment, the plurality of battery racks 10.

The first side cover 200 may include side panels 210, 220, 230 and a thermal insulation panel 250.

The plurality of side panels 210, 220, 230 may be provided and may include a steel sheet. Furthermore, the plurality of side panels 210, 220, 230 may include a galvanized steel sheet or an electrogalvanized steel sheet. The plurality of side panels 210, 220, 230 may be stacked and connected to each other in the lateral direction of the anti-explosion housing 50.

The thermal insulation panel 250 may be positioned facing one side of the at least one battery rack 10, in this embodiment, the plurality of battery racks 10. Specifically, the thermal insulation panel 250 may be positioned between one side of the plurality of battery racks 10 and the side panel 230.

The thermal insulation panel 250 may include an insulating material of a predetermined thickness, for example, glass wool or superwool, to prevent heat transfer. Hereinafter, this embodiment is described based on the thermal insulation panel 250 including superwool of at least 100 mm.

The second side cover 300 may be positioned opposite the first side cover 200, and may cover the other side of the at least one battery rack 10, in this embodiment, the plurality of battery racks 10.

The second side cover 30 may include side panels 310, 320, 330 and a thermal insulation panel 350.

The plurality of side panels 310, 320, 330 may be provided and may include a steel sheet. Furthermore, the plurality of side panels 310, 320, 330 may include a galvanized steel sheet or an electrogalvanized steel sheet. The plurality of side panels 310, 320, 330 may be stacked and connected to each other in the lateral direction of the anti-explosion housing 50.

The thermal insulation panel 350 may be positioned facing the other side of the at least one battery rack 10, in this embodiment, the plurality of battery racks 10. Specifically, the thermal insulation panel 350 may be positioned between the other side of the plurality of battery racks 10 and the side panel 330.

The thermal insulation panel 350 may include an insulating material of a predetermined thickness, for example, glass wool or superwool, to prevent heat transfer. Hereinafter, this embodiment is described based on the thermal insulation panel 350 including superwool of at least 100 mm.

The door units 400, 500 may be coupled to the pair of side covers 200, 300, and may be open/closed on the front side of the at least one battery rack 10, in this embodiment, the plurality of battery racks 10. Through the opening/closing of the door units 400, 500, it is possible to increase the operator's work efficiency in the management or investigation of the at least one battery rack 10.

The door units 400, 500 may be pivotaly hinge-connected from the pair of side covers 200, 300. The pair of door units 400, 500 may be provided and connected to the side covers 200, 300, respectively.

The pair of door units 400, 500 may include the first door 400 and the second door 500.

The first door 400 may be pivotably hinge-connected to the first side cover 200. The first door 400 may include a locking unit that is locked or unlocked by user manipulation or automatic control when the door 400 is closed.

The first door 400 may include a steel sheet. Furthermore, the first door 400 may include a galvanized steel sheet or an electrogalvanized steel sheet.

The second door 500 may be pivotably hinge-connected to the second side cover 30. The second door 500 and the first door 400 may be hermetically coupled to each other when the door units 400, 500 are closed. The second door 500 may include a locking unit that is locked or unlocked by user manipulation or automatic control when the door 500 is closed.

The second door 500 may include a steel sheet. Furthermore, the second door 500 may include a galvanized steel sheet or an electrogalvanized steel sheet.

The rear cover 600 may be provided on the rear side of the door units 400, 500 to cover the rear side of the at least one battery rack 10, in this embodiment, the plurality of battery racks 10.

The rear cover 600 may include rear panels 610, 620 and an air conditioning unit 650.

The rear panels 610, 620 may be positioned facing the rear side of the at least one battery rack 10, in this embodiment, the plurality of battery racks 10. The plurality of rear panels 610, 620 may be provided and stacked along the front-rear direction of the anti-explosion housing 50.

The plurality of rear panels 610, 620 may include a steel sheet. Furthermore, the plurality of rear panels 610, 620 may include a galvanized steel sheet or an electrogalvanized steel sheet.

The air conditioning unit 650 may be configured to control an amount of heat generated from the at least one battery rack 10, in this embodiment, the plurality of battery racks 10, and may be provided in the at least one rear panel 610, 620.

When an abnormal situation in the at least one battery rack 10 occurs, the air conditioning unit 650 may detect heat or smoke generated from the at least one battery rack 10 and stop the operation of the at least one battery rack 10.

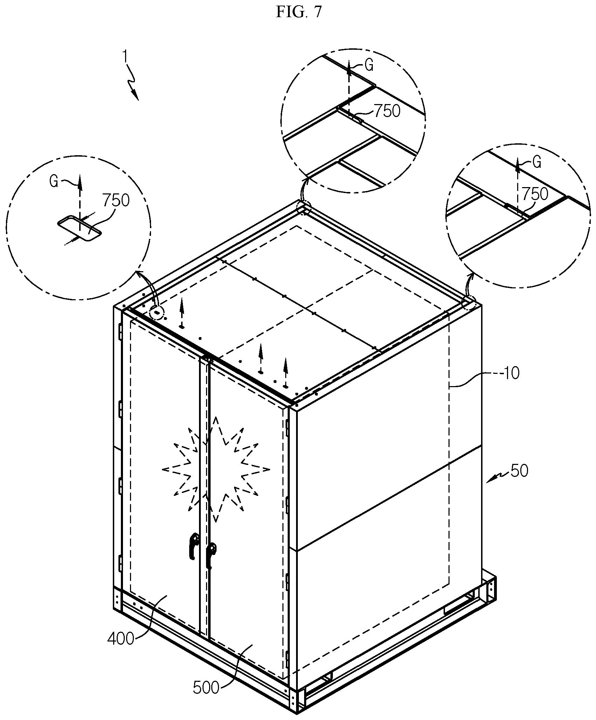

The top cover 700 may be provided on the rear cover 600 and the door units 400, 500 to cover the top of the at least one battery rack 10, in this embodiment, the plurality of battery racks 10. The top cover 700 may include at least one gas outlet 750 (see FIG. 7) to force internal gas out.

The top cover 700 may include a steel sheet. Furthermore, the top cover 700 may include a galvanized steel sheet or an electrogalvanized steel sheet.

The top cover 700 may be coupled to the side covers 300, 400 and the rear cover 600. Here, the top cover 700 may be flange joined to the side covers 300, 400 and the rear cover 600, and when flange joined, the at least one gas outlet 750 may be additionally formed on top of the top cover 700.

The flange joint may be carried out in the coupling between the bottom cover 100, the side covers 300, 400 and the rear cover 600. In this case, the bottom cover 100 may have a gas outlet. In this embodiment, a flame passage may be formed through the formation of the gas outlet via the flange joint, and when flames or explosions of the battery rack 10 in the anti-explosion housing 50 occur, high temperature and high pressure internal gas G (see FIG. 7) may be forced out of the anti-explosion housing 50, thereby effectively reducing the internal pressure of the anti-explosion housing 50.

The anti-explosion housing 50 may further include the base plate 800.

The base plate 800 may support the bottom of the bottom cover 100.

The base plate 800 may include a conveyance guider 820 and a reinforcement rib 850.

The conveyance guider 820 may be provided on at least one side of the base plate 800 to guide the conveyance of the base plate 800 and the conveyance of the entire anti-explosion housing 50 or the energy storage system 1.

The reinforcement rib 850 may be provided on the upper surface of the base plate 800 to reinforce the strength of the base plate 800. At least one reinforcement rib 850 may be provided. Hereinafter, this embodiment is described based on the plurality of reinforcement ribs 850.

The anti-explosion housing 50 may further include a guide pole 900.

At least one guide pole 900 may be provided. Hereinafter, this embodiment is described based on the plurality of guide poles 900.

The plurality of guide poles 900 may be provided between the door units 400, 500 and the rear cover 600 to guide the support of the at least one battery rack 10. The plurality of guide poles 900 may be spaced a predetermined distance apart from each other in the front-rear direction of the anti-explosion housing 50.

Meanwhile, the anti-explosion housing 50 may further include a sealing gasket 950.

The sealing gasket 950 may be positioned on the rear side of the door units 400, 500, to enhance the salability of the edge area of the door units 400, 500 when the door units 400, 500 are closed.

Hereinafter, the mechanism for ensuring safety through the anti-explosion housing 50 when an abnormal situation occurs in the energy storage system 1 according to this embodiment will be described in more detail.

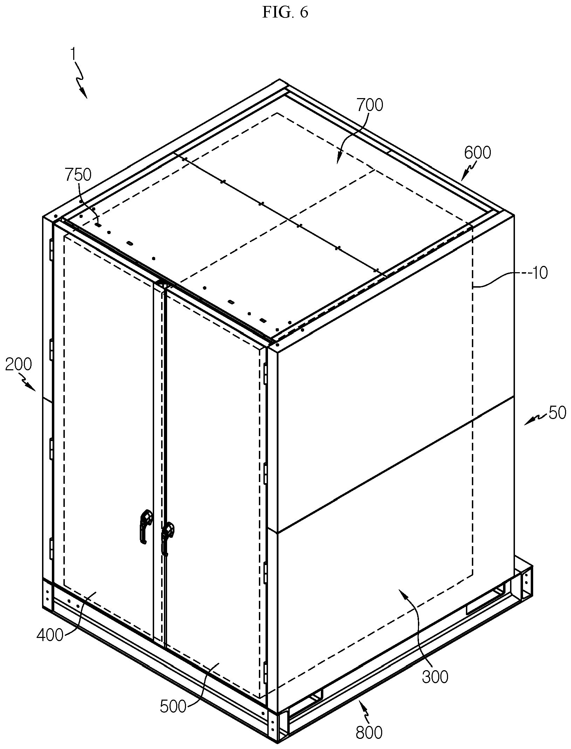

FIGS. 6 and 7 are diagrams illustrating the mechanism for ensuring safety through the anti-explosion housing when the abnormal situation occurs in the energy storage system of FIG. 1.

Referring to FIGS. 6 and 7, the abnormal situation may occur due to overheat in at least one of the plurality of battery racks 10 of the energy storage system 1. In this instance, fires in the battery rack 10 or even explosions of the battery rack 10 may occur depending on the degree of overheat.

In this embodiment, the anti-explosion housing 50 including the steel sheet is configured to seal up the plurality of battery racks 10, and in the event of the fires or explosions, the anti-explosion housing 50 may withstand the explosion pressure of the battery rack 10, thereby preventing the risk of additional explosion propagation out of the anti-explosion housing 50.

In this instance, since the high temperature and high pressure gas G is effectively forced out through the gas outlet 750 of the anti-explosion housing 50, it is possible to reduce the internal pressure of the anti-explosion housing 50, reduce the expansion speed of the explosion gas and sufficiently lower the internal temperature, thereby preventing additional secondary explosion risks more effectively.

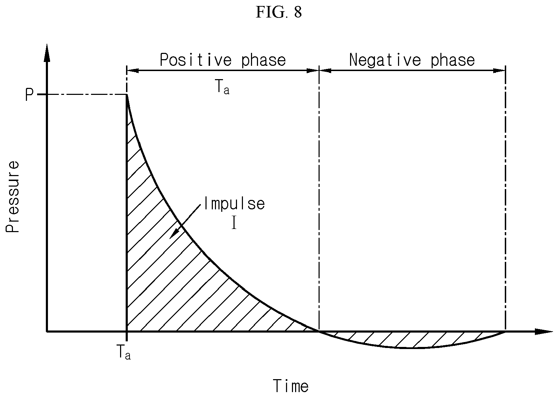

FIG. 8 is a graph illustrating the calculation of the explosion pressure related to the anti-explosion housing of the energy storage system of FIG. 1.

Referring to FIG. 8, first, the simulation conditions for explosion pressure calculation are as follows. The analysis method uses transient analysis, and a linear elasticity model having high accuracy in the elastic range is applied.

Furthermore, Rayleigh Damping Model is applied. Specifically, when vibration occurs in response to impulse in the event of explosion, the damping coefficient which is proportional to the mass and stiffness of the anti-explosion housing is applied. This is defined by the following Equation.

$$C = \alpha M + \beta K \ (\alpha\text{: mass damping coefficient } \beta\text{: stiffness damping coefficient})$$

In the above Equation, C denotes the damping coefficient, M denotes the mass, and K denotes the stiffness.

Additionally, in the simulation, the mesh is applied in the cell size of approximately 0.0075 m, and the number of cells of 5,557,725 EA.

Finally, the physical properties of the anti-explosion housing applied in the simulation are as follows.

[Table 1]

| Part | Material | Density [Kg/m3] | Poisson's Ratio | Young's Modulus [GPa] | Yield Stress [MPa] | Tensile Strength [MPa] |
|------|----------|-----------------|-----------------|-----------------------|--------------------|------------------------|
| Steel sheet | SECC | 7800 | 0.29 | 209 | 175 | 365 |

The explosion pressure calculation theory is described below.

The blast load is divided into a positive phase in which the pressure is higher than the atmospheric pressure and a negative phase in which the pressure is lower than the atmospheric pressure, and when a shock wave reaches, the positive pressure greatly increases instantaneously and subsequently, the magnitude of the positive pressure decreases fast. Subsequently, the negative pressure follows until the pressure equals the ambient atmospheric pressure. However, in general, since the influence of the negative phase is negligibly small in the explosion analysis, only the positive phase is considered. Furthermore, as the hydrogen concentration is higher or the pressure vessel is smaller, higher pressure is applied.

The blast load may be calculated, considering FIG. 8 and the following equations.

The blast load is calculated using the scaled distance as the key variable.

[Equation 1]

$$Z = \frac{R}{W^{(1/3)}}$$

In the above Equation 1, Z denotes the scaled distance, R denotes the distance from the explosive to the object, and W denotes the amount of the explosive.

The pressure of the blast load is calculated as the sum of the incident pressure and the reflected pressure, and the maximum value of the positive pressure considering the incident angle is as follows.

[Equation 2]

$$P_{max} = P_{inc} X (1 + \cos\theta - 2\cos^2\theta) + P_{ref} X \cos^2\theta$$

$P_{max}$ is the maximum positive pressure, $P_{inc}$ is the maximum the incident pressure, and $P_{ref}$ is the maximum the reflected pressure.

The total impulse of the blast load may be calculated by the same method as the maximum positive pressure.

[Equation 3]

$$I_{max} = I_{inc} X (1 + \cos\theta - 2\cos^2\theta) + I_{ref} X \cos^2\theta$$

$I_{max}$ is the total impulse, $I_{inc}$ is the total incident pressure impulse, and $I_{ref}$ is the total reflected pressure impulse.

The positive pressure duration $T_0$ is as follows.

[Equation 4]

$$T_0 = \frac{2 X I_{max}}{P_{max}}$$

$T_0$ is the positive pressure duration, $P_{max}$ is the maximum positive pressure, and $I_{max}$ is the total impulse.

Considering this, the finally calculated blast load equation is as follows.

[Equation 5]

$$P = P_{max} - \frac{P_{max}}{T_0} X (t - T_a)$$

Here, t is the time after the explosion occurred, $P_{max}$ is the maximum positive pressure, $T_a$ is the positive pressure arrival time, and $T_0$ is the positive pressure duration.

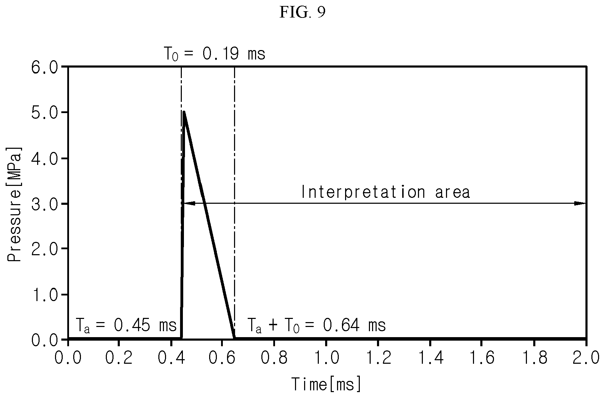

FIG. 9 is a graph illustrating the calculation of the explosion pressure applied to the inner wall of the anti-explosion housing of the energy storage system of FIG. 1.

Referring to FIG. 9, first, the explosion pressure calculation conditions are as follows. Assume that the shortest distance from the explosive to the object is 0.84 m, the amount of the explosive is 0.59 kg, and the incident angle of the explosion pressure onto the wall surface is 0° perpendicular to the surface. Furthermore, the time step is as follows.

$$T_a \leq \text{Time} \leq T_a + T_0 : 0.005\text{ms},$$

$$\text{Time} > T_a + T_0 : 0.1\text{ms},$$

As a result of calculating the explosion pressure, the maximum explosion pressure applied to the wall is 5.01 MPa, the positive pressure arrival time $T_a$ is 0.45 ms, and the positive pressure duration $T_0$ is 0.19 ms.

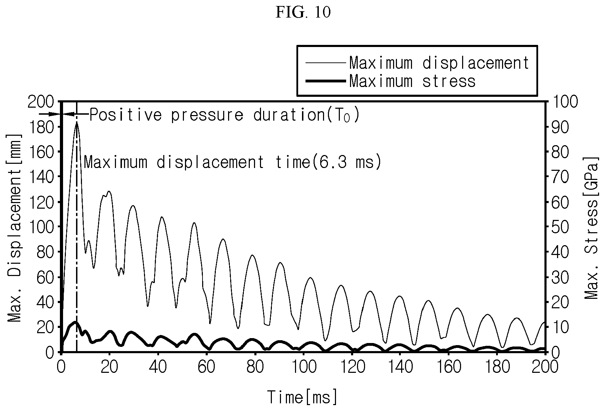

FIG. 10 is a graph illustrating the calculation of the maximum displacement and the maximum stress applied to the inner wall of the anti-explosion housing of the energy storage system of FIG. 1.

Referring to FIG. 10, first, in the test, the steel sheet of the anti-explosion housing is 1.6 mm in thickness. During the positive pressure duration $T_0$, the impulse form explosion pressure occurs, and the maximum displacement is changed up to 183 mm by the explosion pressure, and the displacement is reduced by vibration attenuation and converges to 0 mm. It can be seen that the maximum stress is 12.0 GPa that is 69 times greater than the yield stress (175 MPa). Furthermore, the peak displacement and stress occurs near the door of the anti-explosion housing at the maximum displacement time (6.3 ms).

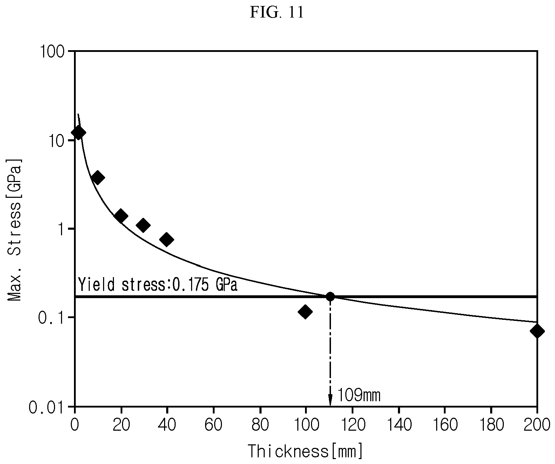

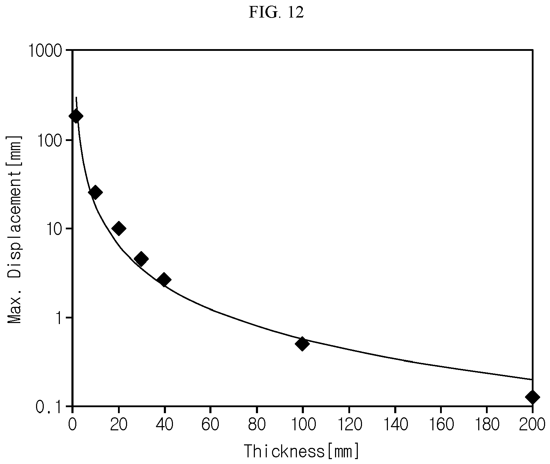

FIGS. 11 and 12 are graphs illustrating the calculation of the maximum stress and the maximum displacement vs thickness of the anti-explosion housing of the energy storage system of FIG. 1. Specifically, FIGS. 11 and 12 show the test results related to the maximum stress and the maximum displacement with varying thickness of the steel sheet of the anti-explosion housing.

Referring to FIGS. 11 and 12, first, the test is conducted using the steel sheet with varying thickness. In the test, an electrogalvanized steel sheet (SECC) is used for the steel sheet, and the thickness varies, for example, 1.6 mm, 10 mm, 20 mm, 30 mm, 40 mm, 100 mm, 200 mm for each steel sheet.

As a result of the test, it can be seen that as the steel sheet increases in thickness, the maximum displacement and the maximum stress of the anti-explosion housing decreases. Additionally, it can be seen that the minimum thickness of SECC at which the maximum stress does not exceed the yield stress (0.175 GPa) is 109 mm, and when the minimum thickness is applied, the maximum displacement is 0.5 mm.

Meanwhile, it is desirable to apply the safety factor in the selection of the final thickness. As noted above, the safety factor is a value set by the designer before the design in accordance with the safety requirement of the structure, and in the case of machinery, a value between 1.2 and 2.0 is usually used. When the safety factor 2.0 is applied to ensure greater safety, the final thickness of the steel sheet may be 218 mm that is obtained by multiplying 109 mm by the safety factor 2.0.

It can be seen through the above-described simulation that when the steel sheet of approximately 200 mm or more is applied to the anti-explosion housing, it is possible to achieve the internal pressure explosion proof design of the anti-explosion housing of the energy storage system. Accordingly, in this embodiment, the steel sheet of approximately 200 mm or more is applied to the anti-explosion housing, it is possible to significantly increase the internal pressure explosion proof performance of the anti-explosion housing.

According to the various embodiments described above, it is possible to provide the energy storage system 1 with improved fire or explosion safety of the battery rack 10.

While an exemplary embodiment of the present disclosure has been hereinabove illustrated and described, the present disclosure is not limited to the above-described particular embodiment and it is obvious to those skilled in the art that a variety of modifications and changes may be made thereto without departing from the claimed subject matter of the present disclosure in the appended claims, and such modifications and changes should not be individually understood from the technical aspects or scope of the present disclosure.

**Claims**

1.    An energy storage system, comprising:

    at least one battery rack; and
    an anti-explosion housing hermetically accommodating the at least one battery rack.

2.    The energy storage system according to claim 1, wherein the anti-explosion housing includes a steel sheet of a predetermined thickness.

3.    The energy storage system according to claim 1, wherein the anti-explosion housing includes:

    a bottom cover configured to cover a bottom of the at least one battery rack;
    a pair of side covers coupled to the bottom cover, and configured to cover two sides of the at least one battery rack;
    a door unit coupled to the pair of side covers, wherein the door unit is open/closed on a front side of the at least one battery rack;
    a rear cover provided on a rear side of the door unit to cover a rear side of the at least one battery rack; and
    a top cover provided on the rear cover and the door unit to cover a top of the at least one battery rack.

4.    The energy storage system according to claim 3, wherein the anti-explosion housing includes a base plate to support a bottom of the bottom cover.

5. The energy storage system according to claim 4, wherein the base plate includes at least one reinforcement rib on an upper surface to reinforce a strength of the base plate.

6. The energy storage system according to claim 3, wherein the pair of side covers include:

a first side cover to cover a side of the at least one battery rack; and
a second side cover positioned opposite the first side cover to cover an opposite side of the at least one battery rack.

7. The energy storage system according to claim 6, wherein each of the first side cover and the second side cover includes a plurality of side panels stacked upon one another.

8. The energy storage system according to claim 6, wherein the first side cover and the second side cover include a thermal insulation panel positioned facing the side of the at least one battery rack.

9. The energy storage system according to claim 8, wherein the thermal insulation panel includes superwool.

10. The energy storage system according to claim 3, wherein the door unit is pivotably hinge-connected from the pair of side covers.

11. The energy storage system according to claim 3, wherein a pair of the door units are provided, and each door unit is connected to each side cover.

12. The energy storage system according to claim 3, wherein the rear cover includes:

at least one rear panel positioned facing the rear side of the at least one battery rack; and
an air-conditioning unit provided in the at least one rear panel to control an amount of heat generated from the at least one battery rack.

13. The energy storage system according to claim 12, wherein when an abnormal situation in the at least one battery rack occurs, the air-conditioning unit detects heat or smoke generated from the at least one battery rack and stops the operation of the at least one battery rack.

14. The energy storage system according to claim 3, wherein the anti-explosion housing includes at least one guide pole between the door unit and the rear cover to guide the support of the at least one battery rack.

FIG. 1

FIG. 2

FIG. 3

FIG. 4

EP 4 184 681 A1

FIG. 5

FIG. 6

FIG. 7

FIG. 8

FIG. 9

FIG. 10

FIG. 11

FIG. 12

<div align="center">**INTERNATIONAL SEARCH REPORT**</div>

| International application No. |
| --- |
| **PCT/KR2022/004096** |

### A. CLASSIFICATION OF SUBJECT MATTER

**H01M 50/24**(2021.01)i; **H01M 50/251**(2021.01)i; **H01M 50/224**(2021.01)i; **H01M 10/658**(2014.01)i; **H01M 10/663**(2014.01)i; **H01M 10/63**(2014.01)i; **H01M 10/627**(2014.01)i; **H01M 10/48**(2006.01)i

According to International Patent Classification (IPC) or to both national classification and IPC

### B. FIELDS SEARCHED

Minimum documentation searched (classification system followed by classification symbols)

H01M 50/24(2021.01); H01M 10/48(2006.01); H01M 10/613(2014.01); H01M 2/10(2006.01); H01M 2/12(2006.01); H01M 2/34(2006.01); H01M 50/20(2021.01); H01M 50/572(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 랙(battery rack), 트레이(tray), 선반(shelf), 방폭(explosion proof), 하우징 (housing)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2191291 B1 (INCELLS CO., LTD.) 16 December 2020 (2020-12-16) See abstract, paragraphs [0016]-[0058], claim 1 and figures 1-5, 6e and 8a-9a. | 1-3,6-7,10-12 |
| Y | | 8-9,13 |
| A | | 4-5,14 |
| Y | KR 10-2021-0007243 A (LG CHEM, LTD.) 20 January 2021 (2021-01-20) See paragraphs [0046], [0065] and [0067] and figure 6. | 8-9,13 |
| A | KR 10-2013-0019928 A (SAMSUNG HEAVY IND. CO., LTD.) 27 February 2013 (2013-02-27) See claim 1 and figures 3-6. | 1-14 |
| A | US 2019-0140235 A1 (CORVUS ENERGY INC.) 09 May 2019 (2019-05-09) See abstract, claims 1, 3, 10 and 12 and figure 1. | 1-14 |

☑ Further documents are listed in the continuation of Box C.     ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 July 2022** | **14 July 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**EP 4 184 681 A1**

<table>
<tr><td colspan="3" align="center"><b>INTERNATIONAL SEARCH REPORT</b></td><td colspan="2">International application No.<br><b>PCT/KR2022/004096</b></td></tr>
<tr><td colspan="5"><b>C.    DOCUMENTS CONSIDERED TO BE RELEVANT</b></td></tr>
<tr><td>Category*</td><td colspan="3">Citation of document, with indication, where appropriate, of the relevant passages</td><td>Relevant to claim No.</td></tr>
<tr><td>A</td><td colspan="3">CN 111416083 A (SHENZHEN AIYIKONG NEW ENERGY TECHNOLOGY CO., LTD.) 14 July 2020 (2020-07-14)<br>    See abstract, claim 1 and figure 1.</td><td>1-14</td></tr>
</table>

Form PCT/ISA/210 (second sheet) (July 2019)

**INTERNATIONAL SEARCH REPORT**
**Information on patent family members**

International application No.

**PCT/KR2022/004096**

| Patent document cited in search report | | | Publication date (day/month/year) | Patent family member(s) | | | Publication date (day/month/year) |
|---|---|---|---|---|---|---|---|
| KR | 10-2191291 | B1 | 16 December 2020 | None | | | |
| KR | 10-2021-0007243 | A | 20 January 2021 | AU | 2020-311777 | A1 | 14 January 2021 |
| | | | | WO | 2021-006626 | A1 | 14 January 2021 |
| KR | 10-2013-0019928 | A | 27 February 2013 | KR | 10-1303010 | B1 | 03 September 2013 |
| US | 2019-0140235 | A1 | 09 May 2019 | CA | 3021577 | A1 | 26 October 2017 |
| | | | | CN | 109565096 | A | 02 April 2019 |
| | | | | EP | 3446357 | A1 | 27 February 2019 |
| | | | | EP | 3446357 | B1 | 29 December 2021 |
| | | | | JP | 2019-514191 | A | 30 May 2019 |
| | | | | JP | 7004697 | B2 | 21 January 2022 |
| | | | | KR | 10-2019-0022485 | A | 06 March 2019 |
| | | | | KR | 10-2390607 | B1 | 25 April 2022 |
| | | | | SG | 10202010361 | A | 27 November 2020 |
| | | | | SG | 11201809267 | A | 29 November 2018 |
| | | | | US | 11217857 | B2 | 04 January 2022 |
| | | | | WO | 2017-181283 | A1 | 26 October 2017 |
| CN | 111416083 | A | 14 July 2020 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210039191